# EUROPEAN PATENT SPECIFICATION

(11) **EP 2 990 643 B1**
(45) Date of publication and mention of the grant of the patent: **21.02.2018**
(21) Application number: 14182513.3
(22) Date of filing: 27.08.2014
(51) Int. Cl.: F03D 1/06

(54) **Rotor blade of a wind turbine**
Rotorblatt einer Windturbine
Pale de rotor d'éolienne

(43) Date of publication of application: 02.03.2016
(73) Proprietor: Siemens Aktiengesellschaft, 80333 München (DE)
(72) Inventor: Enevoldsen, Peder Bay, 7100 Vejle (DK); Torgard, Sigmund Wenningsted, 7000 Fredericia (DK)

(56) References cited:
- EP-A1- 2 650 535
- EP-A2- 2 339 171
- WO-A1-2013/083130
- US-A1- 2011 142 677
- US-A1- 2012 027 595
- US-A1- 2013 259 697

## Description

The present invention relates to a rotor blade for a wind turbine. In particular, it relates to a rotor blade that is designed such that the risk of a collision of the rotor blade with a tower of the wind turbine is reduced.

The need for sufficient clearance between the tower of a wind turbine and the rotor blades of the wind turbine is an important safety requirement. If a collision between the rotor blade and the tower of the wind turbine occurs, there is a high probability that the entire wind turbine structure is damaged seriously.

There is the trend in the wind turbine industry to produce ever larger wind turbines, resulting in the provision of ever larger rotor blades. A considerable design constraint of current rotor blades of wind turbines is the requirement for sufficient clearance to the tower of the wind turbine. This constraint is a severe constraint because larger blades in general tend to yield less tower clearance because larger rotor blades in general deflect more than shorter rotor blades under the same wind pressure.

The challenge of avoiding collision of the rotor blades with the tower has been addressed by various approaches in the past:
A first conventional approach is to increase the distance between the tower and the hub of the wind turbine. A drawback of an increase of this distance is that the center of gravity of the wind turbine moves further away from the tower, which consequently leads to higher structural requirements of the wind turbine.

Another conventional approach to avoid tower collision of the rotor blades is to incline the rotor axis of rotation by several degrees. However, this also leads to a shift of the center of gravity away from the tower.

Another conventional approach is to add material to the rotor blade so that it is more rigid and deflects less under the wind pressure.

Another similar approach is to use more rigid materials for the manufacturing of the rotor blade such as carbon fibers instead of glass fibers. This also leads to a more rigid and more stiff rotor blade which deflects less under the wind pressure. However, a drawback of this approach is the increase of manufacturing costs due to higher material costs of, for instance, carbon fibers compared to glass fibers.

Yet another approach is a pre-bend of the rotor blades away from the tower such as it has been disclosed in the international patent application WO 99/14490 A1 and the German patent application DE 10 2011 056 353 A1. A potential disadvantage of pre-bent rotor blades is on the one hand a more complex manufacturing process and on the other hand difficulties during transportation of the rotor blade from the manufacturing site to the installation site.

There may exist the desire to provide an alternative way to increase the clearance between the rotor blades and the tower of a wind turbine.

This objective is solved by the independent claim. Advantageous embodiments are described in the dependent claims.

According to the invention there is provided a rotor blade for a wind turbine, wherein the rotor blade is arranged and prepared for being mounted to a hub of the wind turbine. A clearance between the rotor blade and the tower of the wind turbine is defined as a minimum distance between the rotor blade in a rotating state and the tower. The rotor blade comprises an aerodynamic portion with a main section, a tip section and a connection section for connecting the main section and the tip section. The main section comprises an airfoil shape with a main pressure side and a main suction side. Likewise, the tip section comprises an airfoil shape with a tip pressure side and a tip suction side. The tip section is bent out of the chordal plane of the connection section. The main pressure side changes into the tip suction side at the connection section and the main suction side changes into the tip pressure side at the connection section. Thus, a bending moment is generated at the tip section which increases the clearance between the rotor blade and the tower of the wind turbine.

A wind turbine is referred to as a device that can convert wind energy, i.e. kinetic energy from wind, into mechanical energy. The mechanical energy is subsequently used to generate electricity. A wind turbine is also denoted a wind power plant.

The present invention is particularly advantageous for an up-wind wind turbine. An up-wind wind turbine refers to a wind turbine where the rotor blades are positioned upstream with regard to the tower with regard to the incoming airflow. The upwind position of the rotor blades with regard to the tower is typically ensured by a yaw movement of the nacelle about a yaw axis which is substantially parallel to a symmetry axis of the tower.

The present invention aims to prevent collision of the rotor blade with the tower. Regarding the rotor blade, the risk of collision is generally highest for the outboard section of the rotor blade, in particular the tip section of the rotor blade. Thus, the present invention particularly relates to mitigate the risk of a collision of the tip section and the adjacent area of the tip section with the tower.

A key aspect of the described rotor blade is that during operation of the wind turbine, i.e. during rotation of the rotor blade in the wind, a force, which is denoted as an aerodynamic lift force, is generated by the tip section. This generates a bending moment which induces the tip section to deflect away from the tower. Thus, the tower clearance, i.e. the clearance between the rotor blade and the tower of the wind turbine, is increased.

An advantage of the described rotor blade and a key technical effect of the specific airfoil shape of the tip section is that a lift force is generated during rotation of the rotor blade. The lift force induces the rotor blade, and in particular the tip section of the rotor blade, to move away from the tower of the wind turbine. Note that the centrifugal force acting on the tip section positively contributes to moving the tip section away from the tower.

A consequence of these advantages is that longer rotor blades can be constructed which in turn increases energy production and efficiency of the wind turbine. Note that the bending moment increases by the power of two with regard to the length of the tip section. Also note that the higher the rotational speed of the rotor blades, the higher the tower clearance contribution from the tip section is.

Note that it is crucial that the joint between the tip section and the remaining rotor blade, i.e. the main section of the aerodynamic portion of the rotor blade, is strong enough to transfer the forces that are generated at the tip section to the main section. In other words, the connection section has to be designed rigid enough to withstand and transfer the generated aerodynamic lift forces at the tip section to the main section of the rotor blade.

A concern of the described rotor blade compared to a conventional rotor blade where the tip section is within the chordal plane of the rotor blade might be that the bent tip section could add a drag penalty, i.e. an additional drag to the rotor blade. However, it has been found that the additional drag that is induced by the bent tip section is negligible compared to the potential performance improvement that can be achieved by the tip section.

Furthermore note that rotor blades with a tip section that is bent out of the chordal plane of the connection section are known to the person skilled in the art. Such a rotor blade has for example been disclosed in the US patent application US 2013/0251535 A1 or in the US patent applications US 2012/0027595 and US 2013/0259697. However, these conventional rotor blades with a bent tip section, or a winglet as it is called as well, significantly differs from the rotor blade disclosed herewith.

The main difference between the rotor blade of this patent application and the rotor blade with the winglet described in US 2013/0251535 A1 is that the cited state-of-the-art winglet has an aerodynamic shape, i.e. an airfoil profile, which is similar to the main part of the rotor blade. In other words, the overall structure and shape of the airfoils along the span of the rotor blade is the same in the main part of the rotor blade as in the winglet.

In contrast, the inventive rotor blade features airfoils which are different in the tip section and the main section of the rotor blade. In particular, the main pressure side merges into the tip suction side at the connection section and the main suction side merges into the tip pressure side at the connection section. In the cited US patent application the main pressure side merges into the tip pressure side at the winglet origin and the main suction side merges into the tip suction side at the winglet origin. Thus, the cited state-of-the-art winglet does not generate any forces that would increase the clearance between the rotor blade and the tower. The cited state-of-the-art winglet is not able, due to its aerodynamic configuration, to increase the tower clearance by generation of a bending moment of the winglet.

The change of the airfoil shape between the main section and the tip section may be abrupt.

Alternatively, the change may be a smooth and gradual change. A gradual change may be advantageous in order to avoid vortices and eddies in the connection section.

Advantageously, the bend of the tip section out of the chordal plane of the connection section is in a range between 0.1 per cent of the length of the rotor blade and 5 per cent of the length of the rotor blade. Particularly, the bend is between 0.2 per cent of the length of the rotor blade and 2 per cent of the length of the rotor blade.

The length of the rotor blade is determined by the length of a straight line from a projection of the tip end of the rotor blade and the root of the rotor blade onto a common reference plane. An appropriate common reference plane may be the chordal plane of the rotor blade at the shoulder of the rotor blade. For highly pre-bent rotor blades other suitable reference planes can be defined, too.

The given values for the bend of the tip section is an advantageous trade off between advantageous aerodynamic effects of the tip section, such as an increase in the lift of the rotor blade, and the drag of the tip section and manufacturing and transportation issues.

The length of the tip section is advantageously in a range between 0.2 per cent of the length of the rotor blade and 10 per cent of the length of the rotor blade. In particular, the length of the tip section is in a range between 0.5 per cent of the rotor blade and 5 per cent of the length of the rotor blade.

In general, a higher length of the tip section results in a higher increase of the clearance between the rotor blade and the tower. Additionally, by increasing the length of the rotor blade the wind turbine is generally able to produce more energy per year due to the fact that it is able to generate more power, particularly at lower wind speeds.

As a rough estimate, for a 3 Megawatt wind turbine with a rotor diameter of 110 meters, a 3 to 5 meter long tip section can yield approximately 25 to 75 centimeters additional tower clearance. This can be used to make the rotor blade up to one meter longer which would yield a gain of annual energy production of approximately 1.5 to 2 per cent.

Again, the given values for the length of the tip section seem to be a reasonable compromise between increase in energy production and manufacturing / transportation issues.

If the change of the airfoil shapes of the main section and the tip section is abrupt, the connection section is small and might even just be a very thin connection interface section. However, advantageously a smooth transition from the airfoil of the main section and the airfoil of the tip section is preferred which leads to preferred values of the connection section, i.e. the length of the connection section, between 0.1 per cent of the length of the rotor blade and 5 per cent of the length of the rotor blade. Particularly, the length of the connection section is between 0.2 per cent of the length of the rotor blade and 2 per cent of the length of the rotor blade.

In another advantageous embodiment, the airfoil at the transition between the main section and the connection section is rotationally symmetric with regard to the airfoil at the transition between the tip section and the connection section.

This has to be understood that, while basically leaving the trailing edge and the leading edge as constant and unchanged lines, the tip pressure side looks similarly or identically to the main suction side. Likewise the main pressure side looks similarly or identically as the tip pressure side. In other words, the airfoil shapes are mirrored at the connection section. Thus, in particular the airfoil shapes are rotationally symmetric about 180 degrees. Note that the rotationally symmetry is particularly beneficial at the transition, i.e. at the connection section, while in more distant spanwise positions of the tip section the absolute dimensions of the airfoils change due to the fact that the absolute value of the chord length decreases in the tip section with increasing spanwise position.

In another advantageous embodiment, the tip section is bent out of the chordal plane of the connection section by less than 100 degrees, in particular by less than 80 degrees, preferably by less than 40 degrees.

The chordal plane of the connection section is defined as the average of the set of chordal planes of the connection section. In particular, if the connection section has a length of, for instance, a few per cent of the length of the rotor blade, the shape and the orientation of the chordal planes along the spanwise direction might change. In this case the chordal plane of the connection section refers to the average chordal plane out of these several chordal planes.

In a first option, an angle between the tip end of the tip section and the chordal plane approaching 90 degrees or even 100 degrees might be beneficial. Such a relatively large angle coincides with many existing bent tip sections, which in this context are denoted typically as winglets.

However, with regard to an efficient transfer of the forces that are generated by the tip section, it might be beneficial having a relatively small angle between the tip end and the chordal plane. Due to a better transfer of the aerodynamic lifting forces generated by the tip section a higher increase of the clearance between the rotor blade and the tower may be achieved.

In another embodiment of the invention, the tip section is bent towards the main pressure side.

Alternatively, the tip section may also be bent towards the main suction side.

As yet another alternative, the tip section comprises a first portion which is bent towards the main pressure side and a second portion which is bent towards the main suction side. The last alternative is also referred to as a double-sided winglet.

The diverse possibilities of bending the tip section out of the chordal plane of the connection section show that the inventive concept works for a pressure side winglet as well as for a suction side winglet as well as for a double-side winglet.

The tip section may be configured and designed as a separate piece which is attached to an existing rotor blade. This is beneficial as then the existing rotor blade can be upgraded or retrofitted in order to become an improved rotor blade with an increased blade tower clearance. The separate tip section can be attached to the existing rotor blade tip using a plurality of known techniques. The tip section may even comprise an extension section in order to not only adding the clearance increase upgrade to an existing rotor blade but also a basic extension of the length of the rotor blade by, for instance, one, two or three meters.

Alternatively, it may also be advantageous to design the aerodynamic portion of the rotor blade as one single piece. Depending on the dimensions of the tip section, in particular the length of the bend of the tip section out of the chordal plane of the connection section, this option might be beneficial as no attachment between two separate parts have to be made and thus lifetime in the long term may be improved.

Embodiments of the invention are now described, by way of example only, with reference to the accompanying drawings, of which:
- Figure 1: shows a wind turbine;
- Figure 2: shows a rotor blade of a wind turbine in a top view onto the main pressure side;
- Figure 3: shows a rotor blade in a view onto the trailing edge;
- Figure 4: illustrates the angle between the tip end and the chordal plane of the connection section;
- Figure 5: illustrates the increase of clearance between the rotor blade and the tower of the wind turbine;
- Figure 6: shows a first embodiment of a rotor blade in a perspective view;
- Figure 7: shows the first embodiment of the rotor blade in a view onto the leading edge of the rotor blade;
- Figure 8: shows a second embodiment of a rotor blade in a perspective view;
- Figure 9: shows the second embodiment of the rotor blade in a view onto the leading edge of the rotor blade;
- Figure 10: shows a third embodiment of a rotor blade in a perspective view;
- Figure 11: shows the third embodiment of the rotor blade in a view onto the leading edge of the rotor blade;
- Figure 12: shows a wind turbine with a fourth embodiment of a rotor blade;
- Figure 13: shows a detailed view of the fourth embodiment of the rotor blade in a perspective view;
- Figure 14: shows the fourth embodiment of the rotor blade in a view onto the trailing edge of the rotor blade;
- Figure 15: shows an extension part comprising a tip section; and
- Figure 16: shows a rotor blade with an attached extension part.

The illustration in the drawings is in schematic form. It is noted that in different figures, similar or identical elements may be provided with the same reference signs.

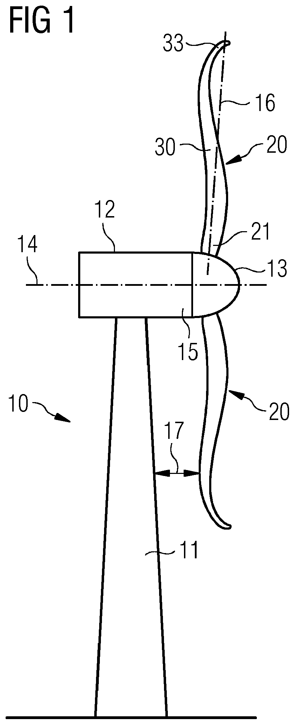

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades 20 (of which two rotor blades 20 are depicted in Figure 1). The hub 13 is mounted rotatable with regard to the nacelle 12 by means of a main bearing. The hub 13 is mounted rotatable about a rotor axis of rotation 14.

The wind turbine 10 comprises furthermore a main shaft, which connects the hub 13 with a rotor of a generator 15. The hub 13 is connected directly to the rotor, thus the wind turbine 10 is referred to as a gearless, direct driven wind turbine. As an alternative, the hub 13 may also be connected to the rotor via a gearbox. This type of wind turbine is referred to as a geared wind turbine.

The generator 15 is accommodated within the nacelle 12. It comprises the rotor and a stator. The generator 15 is arranged and prepared for converting the rotational energy from the rotor into electrical energy.

The rotor blade 20 comprises a root portion 21 by which the rotor blade 20 is attached to the hub 13. The rotor blade 20 is mounted rotatable to the hub 13 and can be rotated about a pitch axis 16. The rotational movement about the pitch axis 16 is also referred to as a pitch movement.

The rotor blade 20 furthermore comprises an aerodynamic portion 30 with a tip section 33. The aerodynamic portion 30 is strongly bent and curved in the example of Figure 1. A minimum distance between the rotor blade 20 and the tower 11 is denoted as clearance 17. A meaningful value for the clearance 17 can only be determined with a rotating rotor blade 20. Otherwise, if the rotor blade 20 was non-rotating and at a position away from the tower 11, the distance between the rotor blade 20 and the tower 11 could be permanently very large and would not indicate the minimum distance between the rotor blade 20 and the tower 11. The value of the clearance 17 is important for assessing the risk of a collision between the rotor blade 20 and the tower 11. For instance, there may be a control mechanism which shuts down the wind turbine if a minimum value for the clearance 17 is undercut.

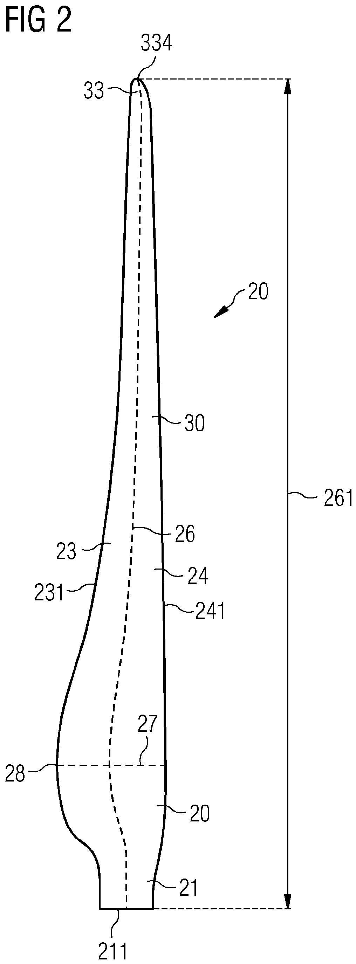

Figure 2 shows a rotor blade 20 of a wind turbine. The rotor blade 20 comprises a root portion 21 with a root 211. Adjacent to the root portion 21 is the transition portion 22 which connects the root portion 21 and an aerodynamic portion 30 of the rotor blade 20. The transition portion 22 and the aerodynamic portion 30 are delineated by the shoulder 28. The shoulder is defined as the region where the chord line 27 comprises a maximum chord length. The aerodynamic portion 30 comprises a tip section 33 with a tip end 334.

The root 211 and the tip end 334 are virtually connected by the span 26 which follows the shape of the rotor blade 20. If the rotor blade were a rectangular shaped object, the span 26 would be a straight line. However, as the rotor blade 20 features a varying thickness, the span 26 is slightly curved or bent as well. Note that if the rotor blade 20 was bent itself, then the span 26 would be bent, too.

The rotor blade 20 furthermore comprises a leading edge section 24 with a leading edge 241 and a trailing edge section 23 with a trailing edge 231.

The trailing edge section 23 surrounds the trailing edge 231. Likewise, the leading edge section 24 surrounds the leading edge 241.

At each spanwise position, a chord line 27 which connects the leading edge 241 with the trailing edge 231 can be defined. Note that the chord line 27 is perpendicular to the span 26.

Furthermore, the rotor blade 20 can be divided into an inboard section which comprises the half of the rotor blade 20 adjacent to the root portion 21 and an outboard section which comprises the half of the rotor blade 20 which is adjacent to the tip section 33. The length of the rotor blade 261 is determined by a straight line from the root 211 to the tip end 334. The tip section 33 is slightly bent out of the chordal plane of the connection section which connects the tip section 33 with the remaining aerodynamic portion 30. Due to the top view onto the pressure side of the rotor blade, the bending of the tip section 33 is not visible in Figure 2.

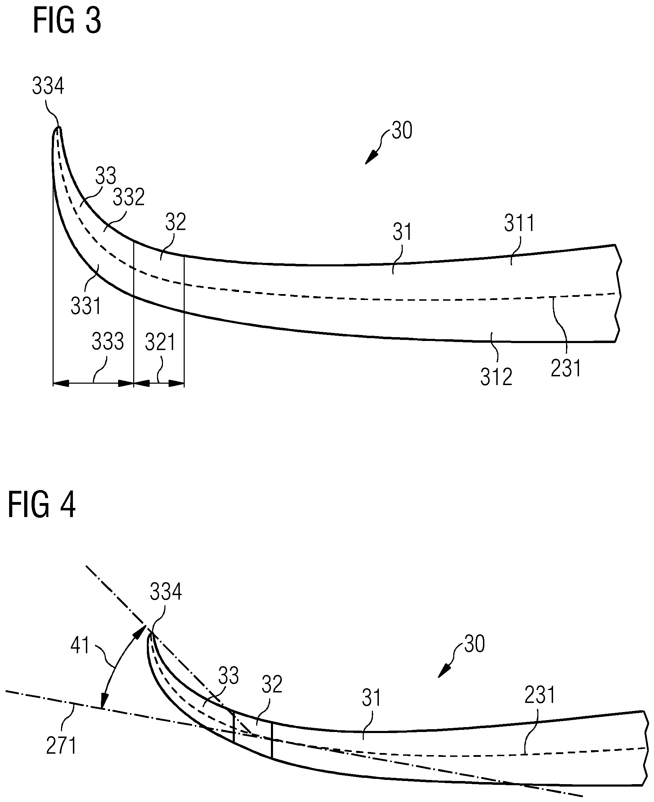

Figure 3 shows a part of the aerodynamic portion 30 of a rotor blade in a view onto the trailing edge 231. In this view, the main pressure side 311 and the main suction side 312 can be well distinguished. The pressure side, in particular the main pressure side 311, extends from the trailing edge 231 to the leading edge 241, which is not visible in Figure 3. The aerodynamic device is relatively straight and plain until the tip section 33. The tip section 33 is strongly curved or bent. The tip section 33 comprises a tip pressure side 331 and a tip suction side 332. The tip section 33 and the main section 31 are connected by the connection section 32. Note that the main pressure side 311 and the tip pressure side 331 are on different sides of the rotor blade, in particular of the aerodynamic portion 30. The section of the aerodynamic portion 30 where the change of the sides occurs is the connection section 32. Likewise the main suction side 312 and the tip pressure side 331 are on different sides as well. The length of the connection section is referred to by the reference sign 321 and the length of the tip section is referred to the reference sign 333.

Figure 4 shows the same aerodynamic portion 30 of a rotor blade as Figure 3. This time, the angle 41 between the tip end 334 of the tip section 33 and the chordal plane 271 of the connection section 32 is illustrated. Note that as the connection section 32 extends over a certain curved section of the rotor blade, an average of the various spanwise chordal planes is taken and is used for determining the angle 41. In the example of Figure 4 the angle 41 amounts to approximately 40 degrees.

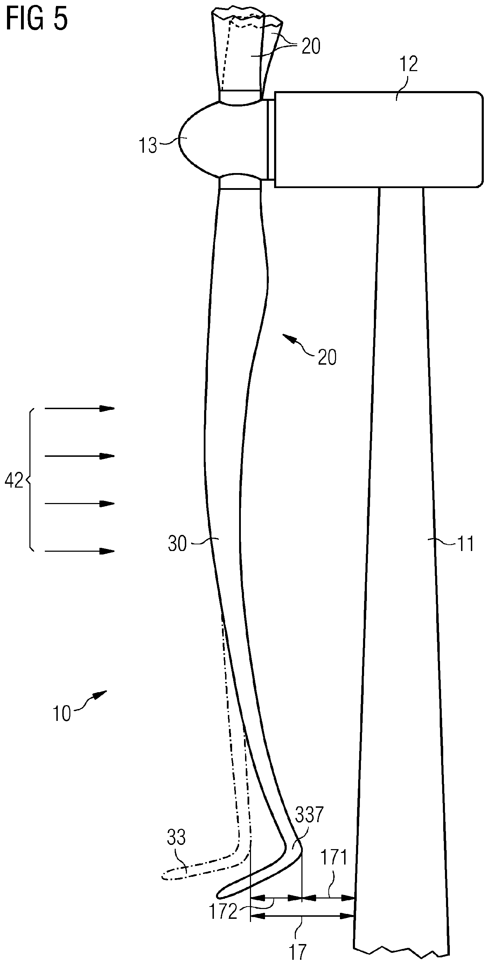

Figure 5 shows another view of a wind turbine 10 with three rotor blades 20. One rotor blade 20 is shown in its full length. Additionally, the direction of the wind, generally speaking the airflow 42, is drawn. Regarding the clearance between the rotor blade 20 and the tower 11 of the wind turbine 10, two scenarios for the tip section of the rotor blade are shown and visualized in Figure 5.

A conventional rotor blade with a conventional tip section 337 is shown. The conventional tip section 337 comprises a bend out of the chordal plane of the connection section, wherein the tip section is bent away from the tower 11. The angle 41 is approximately 90 degrees. Such a tip section is also referred to as a winglet. In particular, it is referred to as a pressure side winglet. By assessing the minimum distance between the rotor blade 20 and the tower 11, a conventional clearance 171 is identified. By comparison to the conventional tip section 172, a tip section according to the invention 33 is shown in dashed lines. Due to the specific airfoil shape of the tip section 33 a bending moment induces the rotor blade to move away from the tower 11. As a consequence, the clearance 17 is changed by a clearance increase 172 compared to the conventional clearance 171. Thus, the risk of a collision between the rotor blade 20 and the tower 11 is mitigated.

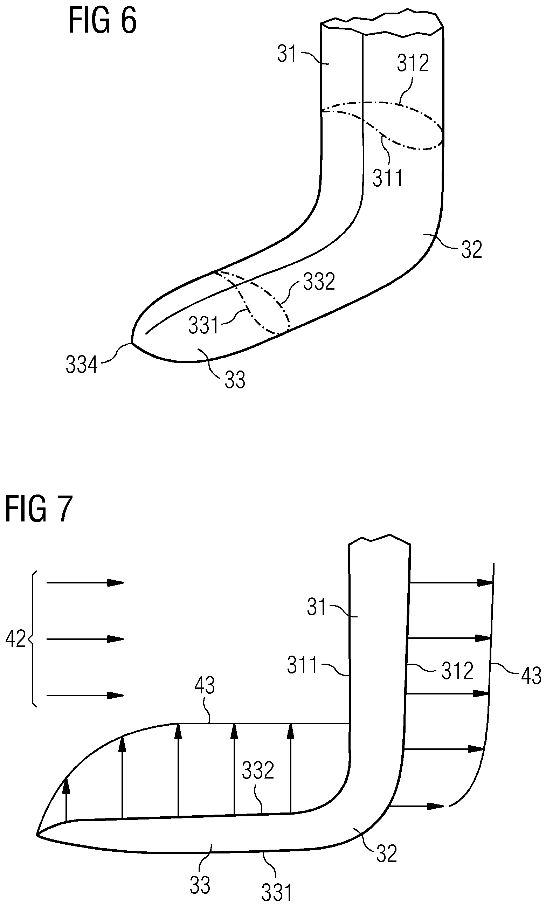

Figure 6 shows a first embodiment of a rotor blade. It comprises a main section 31 with an airfoil shape that is mainly characterized by the main pressure side 311 and the main suction side 312. The main section is bent out of its plane at the tip section 33 of the rotor blade. In the tip section 33, the airfoil profile looks at first similar to the airfoil from the main section 31. However, if one follows closely the pressure sides and the suction sides of the rotor blade it will be obvious that at the connection section 32 the main suction side 312 changes into the tip pressure side 331 while the main pressure side 311 changes into the tip suction side 332. Thus, disregarding the shape of the airfoils, the tip section and the adjacent main section of the rotor blade looks like in a conventional rotor blade. However, if one closely looks at the airfoil shapes of both sections, a striking difference can be observed.

This has the consequence that a lifting force 43 can be assigned to the main section 31 and another lifting force 43 can be assigned to the tip section 33. As the wind flow 42 is blowing from the left to the right there will be a movement of the tip section in direction to the main section 31. These lifting forces create a bending moment that moves the tip section 33 such that the risk of collision between the rotor blade and a tower is mitigated.

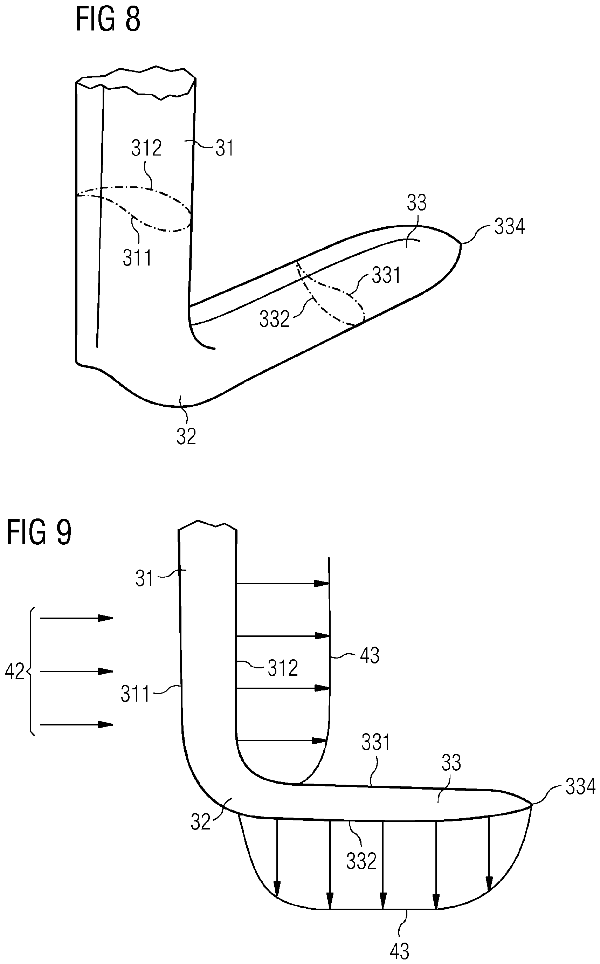

Figure 8 shows a similar embodiment as Figure 6, but this time the tip section is bent towards the main suction side 312. Again, the shapes of the airfoils in the main section 31 and in the tip section 33 are different. This again leads to lifting forces 43 that can be seen in Figure 9. This time the tip section 33 is induced to a movement away from the main suction side 312. This will also decrease the clearance between the rotor blade and the tower of the wind turbine, which has to be imagined at the right of the Figure 9 if the rotor blade is once installed to the hub and the tower of a wind turbine.

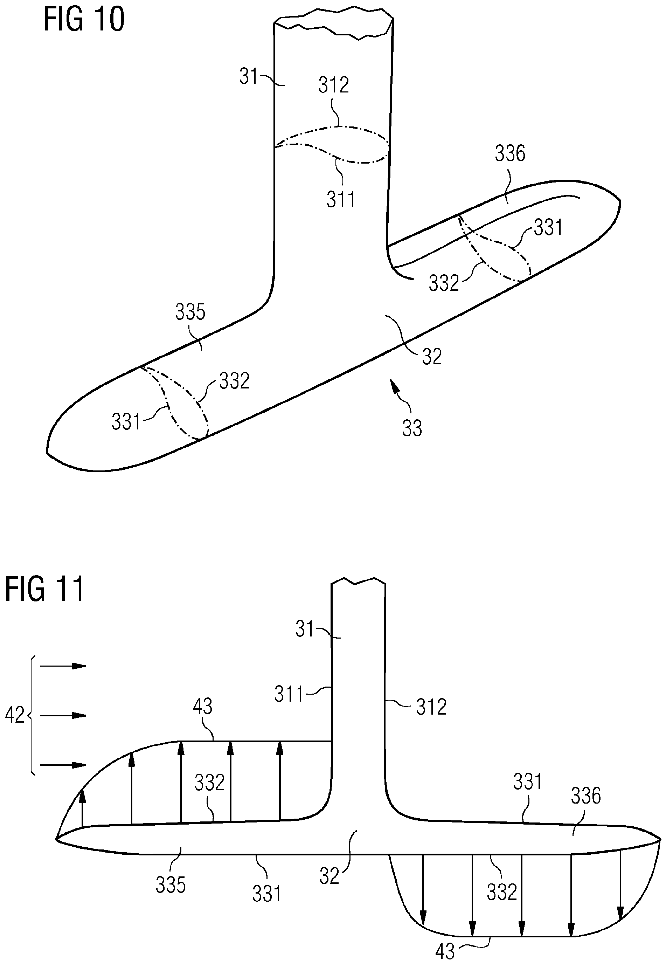

Figure 10 shows a double-sided tip section. This shape is known from double-sided winglets, for example. However, again, the shapes of the airfoils are different to existing winglets. Note that the side of the tip section 33 that is bent towards the main pressure side 311 is referred to as the first portion 335, while the section of the tip section 33 that is bent towards the main suction side 312 is referred to as the second portion 336.

Figure 11 illustrates the lift forces of the tip section 33. Now, the lift forces 43 that act on the tip suction side 332 of the first portion 335 and the lift forces 43 that act on the tip suction side 332 of the second portion 336 complement each other. They can be attributed to the same bending moment that is located somewhere in the center of the connection section 32. As a result, the first portion 335 is moved in clockwise direction, and the second portion 336 is moved in clockwise direction, too.

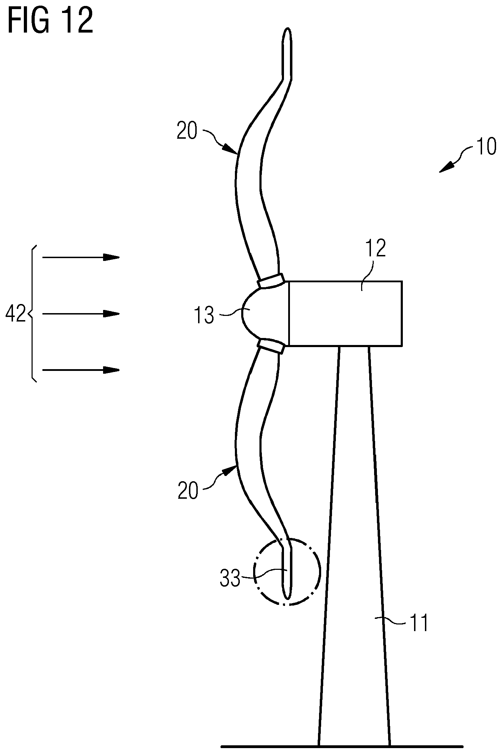

Figure 12 shows a fourth embodiment of a rotor blade 20 with a bent tip section 33. The wind turbine 10 that is shown in Figure 12 also has pre-bent rotor blades 20. In this embodiment, the tip sections 33 are only bent in a relatively small angle away from the chordal plane of the connection section.

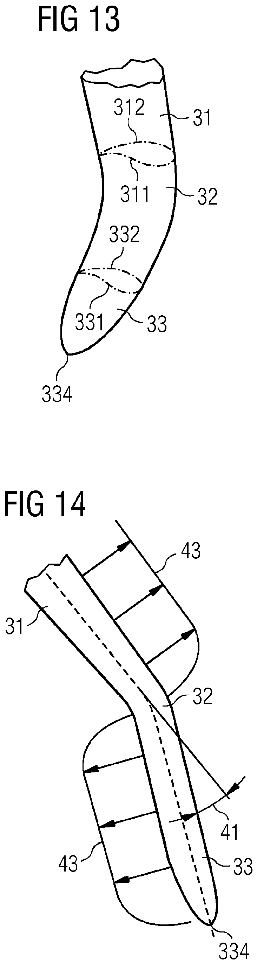

Figure 13 shows a perspective view of the fourth embodiment of the rotor blade. Note that it is relatively similar to the rotor blade that is shown in Figure 6 with the only difference that the bending between the tip section 33 and the main section 31 is less pronounced. However, this has the advantage that forces that are generated at the tip section 33 are more easily and more efficiently transferred to the main section 31. Thus, the connection section 32 can be constructed less rigidly and stiffly.

Figure 14 shows the same embodiment as in the two previous Figures but in a view onto the trailing edge of the rotor blade. Again, the angle 41 between the chordal plane of the connection section 32 and the tip end 334 can be seen and assessed.

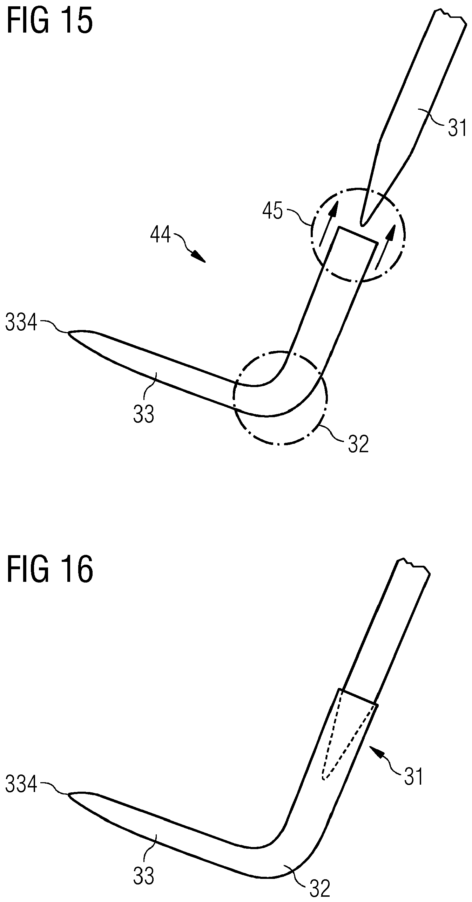

Finally, Figures 15 and 16 show a rotor blade that comprises a main section 31 and a tip section 33 with a connection section 32, the latter one being built as a separate extension part 44. This has the advantage that the extension part 44 can be better transported together with the rotor blade and also that existing rotor blades can be retrofitted and upgraded by this extension part 44. The extension part 44 comprises the tip section 33, the connection section 32 and also an extension connection section 45. By means of the extension connection section 45, the extension part 44 is connected safely and reliably to the original tip section of the existing rotor blade.

## Claims

1. Rotor blade (20) for a wind turbine (10),
wherein
- the rotor blade (20) is arranged and prepared for being mounted to a hub (13) of the wind turbine (10),
- a clearance (17) between the rotor blade (20) and the tower (11) of the wind turbine (10) is defined as the minimum distance between the rotor blade (20) in a rotating state and the tower (11),
- the rotor blade (20) comprises an aerodynamic portion (30) with a main section (31), a tip section (33) and a connection section (32) for connecting the main section (31) and the tip section (33),
- the main section (31) comprises an airfoil shape with a main pressure side (311) and a main suction side (312),
- the tip section (33) comprises an airfoil shape with a tip pressure side (331) and a tip suction side (332), and
- the tip section (33) is bent out of the chordal plane (271) of the connection section (32),
**characterized in that**
- the main pressure side (311) changes into the tip suction side (332) at the connection section (32) and the main suction side (312) changes into the tip pressure side (331) at the connection section (32), thus a bending moment is generated at the tip section (33) which increases the clearance (17) between the rotor blade (20) and the tower (11) of the wind turbine (10).

2. Rotor blade (20) according to claim 1,
wherein the length of the tip section (333) out of the chordal plane (271) of the connection section (32) is in a range between 0.1 per cent and 5 per cent of the length of the rotor blade (261), in particular between 0.2 per cent and 2 per cent of the length of the rotor blade (261).

3. Rotor blade (20) according to one of the preceding claims, wherein the length of the tip section (333) is in a range between 0.2 per cent and 10 per cent of the length of the rotor blade (261), in particular between 0.5 per cent and 5 per cent of the length of the rotor blade (261).

4. Rotor blade (20) according to one of the preceding claims, wherein the length of the connection section (321) is in a range between 0.1 per cent and 5 per cent of the length of the rotor blade (261), in particular between 0.2 per cent and 2 per cent of the length of the rotor blade (261).

5. Rotor blade (20) according to one of the preceding claims, wherein the airfoil at the transition between the main section (31) and the connection section (32) is rotationally symmetric, in particular rotationally symmetric about 180 degrees, with regard to the airfoil at the transition between the tip section (33) and the connection section (32).

6. Rotor blade (20) according to one of the preceding claims, wherein the tip section (33) is bent out of the chordal plane (271) of the connection section (32) by less than 100 degrees, in particular by less than 80 degrees, preferably by less than 40 degrees.

7. Rotor blade (20) according to one of the preceding claims, wherein the tip section (33) is bent towards the main pressure side (311).

8. Rotor blade (20) according to one of the claims 1 to 6, wherein the tip section (33) is bent towards the main suction side (312).

9. Rotor blade (20) according to one of the claims 1 to 6, wherein the tip section (33) comprises a first portion (335) which is bent towards the main pressure side (311) and a second portion (336) which is bent towards the main suction side (312).

10. Rotor blade (20) according to one of the preceding claims,
wherein the aerodynamic portion (30) is built as one single piece.

## Patentansprüche

1. Rotorblatt (20) für eine Windenergieanlage (10),
wobei
- das Rotorblatt (20) zum Anbringen an einer Nabe (13) der Windenergieanlage (10) angeordnet und ausgelegt ist,
- eine Entfernung (17) zwischen dem Rotorblatt (20) und dem Turm (11) der Windenergieanlage (10) als Mindestabstand zwischen dem Rotorblatt (20) im rotierenden Zustand und dem Turm (11) definiert ist,
- das Rotorblatt (20) einen aerodynamischen Abschnitt (30) mit einem Hauptteil (31), einem Spitzenteil (33) und einem Verbindungsteil (32) zum Verbinden des Hauptteils (31) und des Spitzenteils (33) umfasst,
- der Hauptteil (31) eine Profilform mit einer Hauptdruckseite (311) und einer Hauptsaugseite (312) umfasst,
- der Spitzenteil (33) eine Profilform mit einer Spitzendruckseite (331) und einer Spitzensaugseite (332) umfasst und
- der Spitzenteil (33) aus der Profilsehnenebene (271) des Verbindungsteils (32) heraus gebogen ist,
**dadurch gekennzeichnet, dass**
- aus der Hauptdruckseite (311) an dem Verbindungsteil (32) die Spitzensaugseite (332) und aus der Hauptsaugseite (312) an dem Verbindungsteil (32) die Spitzendruckseite (331) wird, wodurch an dem Spitzenteil (33) ein Biegemoment erzeugt wird, das die Entfernung (17) zwischen dem Rotorblatt (20) und dem Turm (11) der Windenergieanlage (10) vergrößert.

2. Rotorblatt (20) nach Anspruch 1,
wobei die Länge des Spitzenteils (333) außerhalb der Profilsehnenebene (271) des Verbindungsteils (32) in einem Bereich zwischen 0,1 Prozent und 5 Prozent der Länge des Rotorblatts (261), insbesondere zwischen 0,2 Prozent und 2 Prozent der Länge des Rotorblatts (261) liegt.

3. Rotorblatt (20) nach einem der vorhergehenden Ansprüche,
wobei die Länge des Spitzenteils (333) in einem Bereich zwischen 0,2 Prozent und 10 Prozent der Länge des Rotorblatts (261), insbesondere zwischen 0,5 Prozent und 5 Prozent der Länge des Rotorblatts (261) liegt.

4. Rotorblatt (20) nach einem der vorhergehenden Ansprüche,
wobei die Länge des Verbindungsteils (321) in einem Bereich zwischen 0,1 Prozent und 5 Prozent der Länge des Rotorblatts (261), insbesondere zwischen 0,2 Prozent und 2 Prozent der Länge des Rotorblatts (261) liegt.

5. Rotorblatt (20) nach einem der vorhergehenden Ansprüche,
wobei das Profil am Übergang zwischen dem Hauptteil (31) und dem Verbindungsteil (32) in Bezug auf das Profil am Übergang zwischen dem Spitzenabschnitt (33) und dem Verbindungsabschnitt (32) rotationssymmetrisch, insbesondere um 180 Grad rotationssymmetrisch ist.

6. Rotorblatt (20) nach einem der vorhergehenden Ansprüche,
wobei der Spitzenabschnitt (33) um weniger als 100 Grad, insbesondere um weniger als 80 Grad, vorzugsweise um weniger als 40 Grad aus der Profilsehnenebene (271) des Verbindungsteils (32) heraus gebogen ist.

7. Rotorblatt (20) nach einem der vorhergehenden Ansprüche,
wobei der Spitzenteil (33) zur Hauptdruckseite (311) hin gebogen ist.

8. Rotorblatt (20) nach einem der Ansprüche 1 bis 6,
wobei der Spitzenteil (33) zur Hauptsaugseite (312) hin gebogen ist.

9. Rotorblatt (20) nach einem der Ansprüche 1 bis 6,
wobei der Spitzenteil (33) einen ersten Abschnitt (335), der zur Hauptdruckseite (311) hin gebogen ist, und einen zweiten Abschnitt (336) umfasst, der zur Hauptsaugseite (312) hin gebogen ist.

10. Rotorblatt (20) nach einem der vorhergehenden Ansprüche,
wobei der aerodynamische Abschnitt (30) einstückig aufgebaut ist.

## Revendications

1. Pale de rotor (20) destinée à une éolienne (10), dans laquelle
- la pale de rotor (20) est agencée et préparée pour être montée sur un moyeu (13) de l'éolienne (10),
- un espace libre (17) entre la pale de rotor (20) et la tour (11) de l'éolienne (10) est défini comme la distance minimum entre la pale de rotor (20) dans un état rotatif et la tour (11),
- la pale de rotor (20) comprend une partie aérodynamique (30) dotée d'une section principale (31), d'une section de pointe (33) et d'une section de connexion (32) permettant de connecter la section principale (31) et la section de pointe (33),
- la section principale (31) comprend une forme aérodynamique dotée d'un côté de pression principal (311) et d'un côté d'aspiration principal (312),
- la section de pointe (33) comprend une forme aérodynamique dotée d'un côté de pression de pointe (331) et d'un côté d'aspiration de pointe (332), et
- la section de pointe (33) est pliée à l'extérieur du plan chordal (271) de la section de connexion (32),
**caractérisée en ce que**
- le côté de pression principal (311) passe dans le côté d'aspiration de pointe (332) au niveau de la section de connexion (32) et le côté d'aspiration principal (312) passe dans le côté de pression de pointe (331) au niveau de la section de connexion (32), un moment de pliage est ainsi généré au niveau de la section de pointe (33) qui augmente l'espace libre (17) entre la pale de rotor (20) et la tour (11) de l'éolienne (10).

2. Pale de rotor (20) selon la revendication 1,
dans lequel la longueur de la section de pointe (333) à l'extérieur du plan chordal (271) de la section de connexion (32) se trouve dans une plage située entre 0,1 pour cent et 5 pour cent de la longueur de la pale de rotor (261), en particulier entre 0,2 pour cent et 2 pour cent de la longueur de la pale de rotor (261).

3. Pale de rotor (20) selon l'une des revendications précédentes, dans lequel la longueur de la section de pointe (333) se trouve dans une plage située entre 0,2 pour cent et 10 pour cent de la longueur de la pale de rotor (261), en particulier entre 0,5 pour cent et 5 pour cent de la longueur de la pale de rotor (261).

4. Pale de rotor (20) selon l'une des revendications précédentes, dans lequel la longueur de la section de connexion (321) se trouve dans une plage située entre 0,1 pour cent et 5 pour cent de la longueur de la pale de rotor (261), en particulier entre 0,2 pour cent et 2 pour cent de la longueur de la pale de rotor (261).

5. Pale de rotor (20) selon l'une des revendications précédentes, dans lequel l'aérodynamique à la transition entre la section principale (31) et la section de connexion (32) est symétrique en rotation, en particulier symétrique en rotation aux environs de 180°, par rapport à l'aérodynamique à la transition entre la section de pointe (33) et la section de connexion (32).

6. Pale de rotor (20) selon l'une des revendications précédentes, dans lequel la section de pointe (33) est pliée à l'extérieur du plan chordal (271) de la section de connexion (32) de moins de 100 degrés, en particulier de moins de 80 degrés, de préférence de moins de 40 degrés.

7. Pale de rotor (20) selon l'une des revendications précédentes, dans lequel la section de pointe (33) est pliée vers le côté de pression principal (311).

8. Pale de rotor (20) selon l'une des revendications 1 à 6, dans lequel la section de pointe (33) est pliée vers le côté d'aspiration principal (312).

9. Pale de rotor (20) selon l'une des revendications 1 à 6, dans lequel la section de pointe (33) comprend une première partie (335) qui est pliée vers le côté de pression principal (311) et une seconde partie (336) qui est pliée vers le côté d'aspiration principal (312).

10. Pale de rotor (20) selon l'une des revendications précédentes, dans lequel la partie aérodynamique (30) est construite en une seule pièce.
